Europäisches Patentamt

European Patent Office

Office européen des brevets

(11) Publication number: **0 420 072 A2**

# EUROPEAN PATENT APPLICATION

(21) Application number: **90118223.8**

(22) Date of filing: **21.09.90**

(51) Int. Cl.5: **G02F 1/1335**

(30) Priority: **28.09.89 JP 250433/89**

(43) Date of publication of application:
**03.04.91 Bulletin 91/14**

(84) Designated Contracting States:
**DE GB**

(71) Applicant: **TOSHIBA LIGHTING & TECHNOLOGY CORPORATION**
**4-28, Mita 1-chome**
**Minato-ku Tokyo(JP)**

(72) Inventor: **Nakamura, Masako**
**2-30-8-102, Nakatehara, Kohoku-ku**
**Yokohama-shi(JP)**
Inventor: **Baba, Masaharu**
**1-19-10, Takafunedai, Kanazawa-ku**
**Yokohama-shi(JP)**

(74) Representative: **Henkel, Feiler, Hänzel & Partner**
**Möhlstrasse 37**
**W-8000 München 80(DE)**

(54) **Liquid crystal device.**

(57) A liquid crystal display comprising a liquid crystal display board (10) including a display plane constituted by transmission-type liquid crystals, a back light source device (20) including a tube-like lamp arranged in the rear of the liquid crystal display board (10) for illuminating the rear surface of the liquid crystal display board (10), and a light diffusing transmission plate (32), wherein the direction in which an angle of visibility of the liquid crystal display board (10) is wide coincides with the direction in which unevenness of the luminance in a light diffusing transmission plate in the light source device is small.

F I G. I

# LIQUID CRYSTAL DISPLAY

This invention relates to a liquid crystal display having a liquid crystal display board and a back light source device for applying light to the rear surface of the liquid crystal display board.

Liquid crystal display are widely used in liquid crystal television sets, liquid crystal displays of OA equipment, and various instrument panels. In general, the liquid crystal display comprises a liquid crystal display board including a transmission type liquid crystal, and a back light source device for applying light to the rear surface of the board.

To illuminate the entire region of the liquid crystal display board uniformly, the back light source device must have a light source which can illuminate a large area two-dimensionally and uniformly. For this purpose, the back light source device of this type is constituted by a tube-shaped lamp such as a fluorescent lamp, a reflection mirror also serving as a casing for housing the lamp, and a light diffusing transmission board arranged in the opening of the casing.

A fluorescent lamp has a luminous efficiency higher than that of a incandescent lamp, generates less heat, and lasts longer. In addition, since it is tube-shaped, having a long luminous portion, the luminous area is relatively large and the light distribution is uniform. Especially if a plurality of long straight tube-like fluorescent lamps are arranged in parallel, or a curved such as a U-shaped or W-shaped tube in which at least two straight portions of tubes are arranged substantially parallel, the luminous area covers a large two-dimensional area, thus illuminating the liquid crystal display board uniformly.

Hence, a liquid crystal display having the above-described fluorescent lamp can produce clearer images on the display board than one which has an incandescent lamp. However, even in liquid crystal displays of this type, displays which allow clear images cannot always be produced with each production lot.

It is accordingly an object of the present invention to allow images tc be clearly displayed on any liquid crystal display. It is another object of the invention to provide a liquid crystal display on which images can always be displayed clearly.

According to the present invention, there is provided a liquid crystal display comprising a liquid crystal display board including a display plane constituted by transmission-type liquid crystals and a back light source device including a tube-like lamp, arranged at the rear of the liquid crystal display board for illuminating the rear surface of the liquid crystal display board, wherein the direction in which an angle of visibility of the liquid crystal display board is wide coincides with the direction in which unevenness of the luminance in a light diffusing transmission plate in the light source device is small.

By virtue of the present invention, since the direction in which the angle of visibility is large coincides with the direction in which unevenness of luminance on the light diffusing transmission plate is low, the variance of luminance on the light diffusing transmission plate is low in the direction in which the angle of visibility is large. Hence, the luminance of the display is uniform in this direction. In the perpendicular direction, in which the angle of visibility is small, although the luminance is uneven, the overall luminance of the display is not significantly varied, due to the small angle of visibility in this direction. For the reasons stated above, clear images can be obtained on the whole.

This invention can be more fully understood from the following detailed description when taken in conjunction with the accompanying drawings, in which:

Fig. 1 is an exploded perspective view showing an entire liquid crystal display according to an embodiment of the present invention;

Fig. 2 is a front view of the display shown in Fig. 1;

Fig. 3 is a cross-sectional view of the display shown in Fig. 1;

Fig. 4 is an exploded perspective view showing an entire liquid crystal display according to another embodiment of the present invention; and

Fig. 5 is a cross-sectional view of the display shown in Fig. 4.

The inventors studied in what way images were seen clearly or not, and found that the difference results from the combination of the directions of the axes of the back light source device and the liquid crystal display board.

More specifically, the luminance of the light diffusion board is uniform in the direction along the longitudinal axis of the straight portion of the lamp (the x-direction of the two-dimensional coordinates), while not uniform in the direction perpendicular to the axis (the y-direction of the two-dimensional coordinates). In short, luminance uniformity is high in the x-direction and low in the y-direction.

The transmission-type liquid crystals of the liquid crystal display board illuminated by the back light source device have a characteristic relating to the angle of visibility. When a user looks at the liquid crystal display plane, the image is seen normally or as a negative image depending on the angle and the direction at which the plane is seen.

The angle at which the image is first seen reversely is called the angle of visibility. The angle is different in the horizontal direction of the liquid crystal display plane (the x-direction) from that in the vertical direction thereof (the y-direction). In consideration of this point, an improved liquid crystal display can be provided in which images can be seen more clearly by adjusting the directions of the axes of the back light source device and the liquid crystal display plane.

(Embodiment 1)

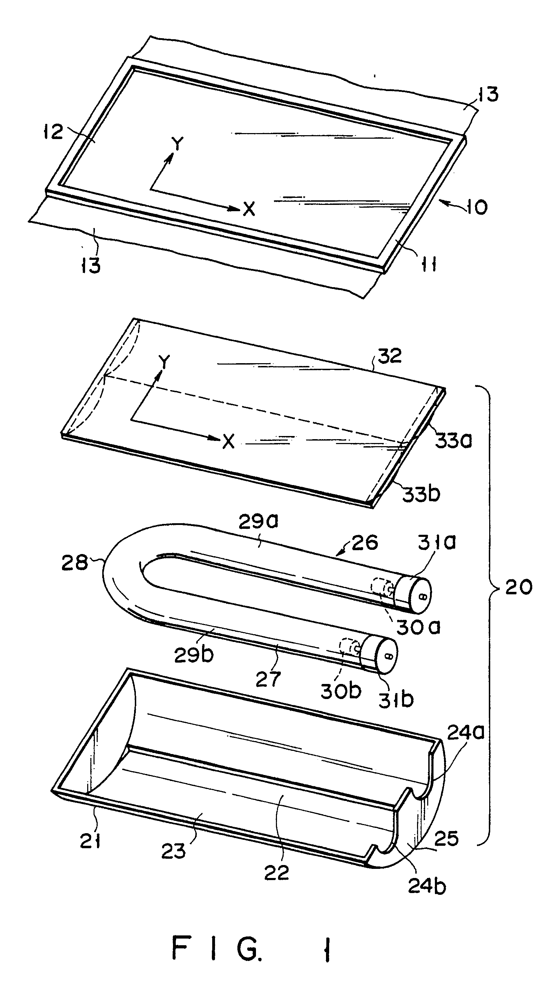

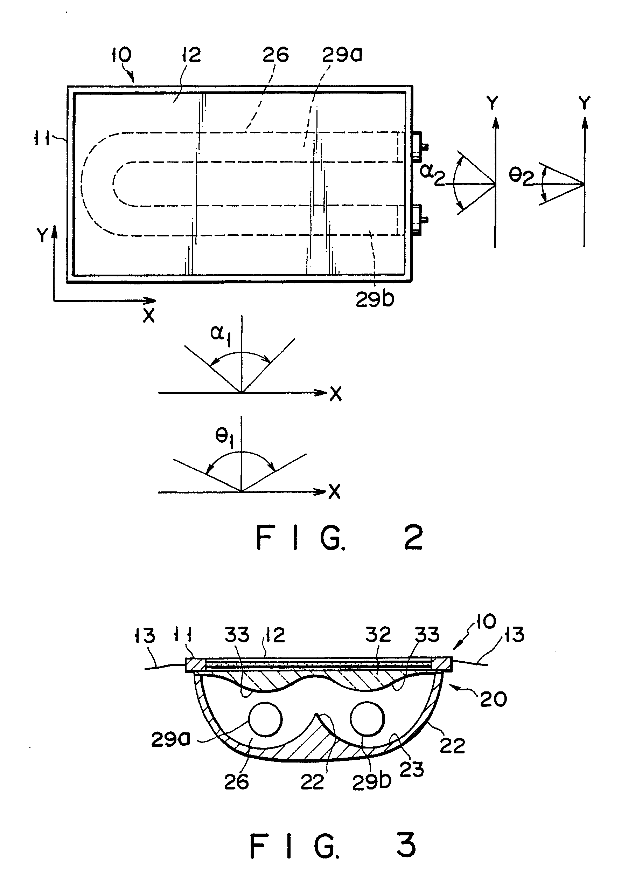

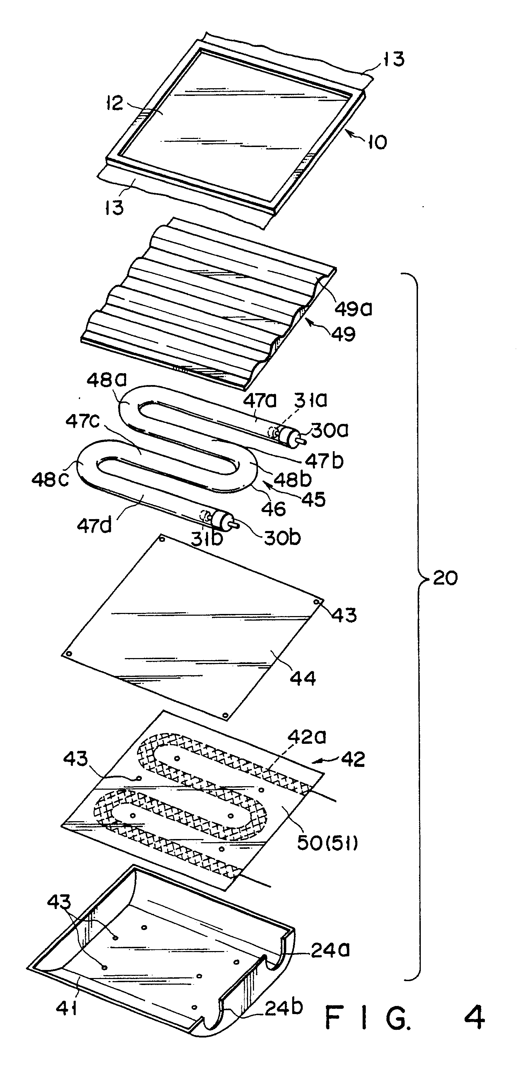

A liquid crystal display according to a first embodiment of the present invention will be described with reference to Figs. 1 to 3.

The liquid crystal display comprises liquid crystal display board 10 and back light source device 20.

Liquid crystal display board 10 has a rectangular frame 11, a rectangular liquid crystal display plane 12 including transmission-type liquid crystals within frame 11, and terminal film 13 which is to be connected to a power source. The rear surface of liquid crystal display board 10 is illuminated by back light source device 20.

Back light source device 20 has casing 21, fluorescent lamp 26, and light diffusing transmission plate 32, and is constituted as follows:

Casing 21 is shaped like a trough having a rectangular opening, and its cross-section is in the shape of a quadratic curve. Partitioning projection 22 is formed integral with casing 21 at the center of the bottom and along the longitudinal axis thereof. Projection 22 has a substantially triangular cross-section. The entire region of the bottom of casing 21 and the surface of projection 22 function as reflection surface 23; thus casing 21 also serves as a reflection mirror. Cutout sections 24a and 24b are formed in one side wall 25 of casing 21.

A U-shaped fluorescent lamp 26 has U-shaped tube 27 including U-shaped portion 28 and straight portions 29a and 29b, which are arranged substantially parallel to each other. Cold cathode type electrodes 30a and 30b are connected to bases 31a and 31b, which seal tube 27 at the distal ends of straight portions 29a and 29b. The inner surface of tube 27 is coated with fluorescent material (not shown). Tube 27 contains a predetermined amount of hydrargyrum and a rare gas such as argon or xenon for initiating the operation of the lamp.

Fluorescent lamp 26 is housed in casing 21 in such a manner that straight portions 29a and 29b are substantially parallel to the bottom of casing 21. Straight portions 29a and 29b are arranged in parallel with projection 22, which is interposed therebetween. In other words, projection 22 is disposed between the two adjacent straight portions 29a and 29b, thereby isolating them. Bases 31a and 31b are engaged with and fixed by adhesive or the like to cutout sections 24a and 24b of side wall 25 of casing 21. Thus, fluorescent lamp 26 is attached within casing 21.

Rectangular light diffusing transmission plate 32 is attached to the opening of casing 21. Light diffusing transmission plate 32 is a milky white plate made of acrylic resin and diffuses light. Thick portions 33a and 33b are formed on regions of plate 32 which exactly face straight portions 29a and 29b of tube 27, respectively. Thick portions may be formed on the front surface or the rear surface of plate 32. The thickness of each of thick portions 33a and 33b is gradually reduced as the distance from the longitudinal axis of 35 straight portion 29a or 29b increases.

The front surface of light diffusing transmission plane 32 of light source device 20 is superposed on liquid crystal display plane 12 of liquid crystal display board 10, thereby coupling liquid crystal display board 10 and back light source device 20.

Regaruing liquid crystal display board 10, as shown in Fig. 2, liquid crystal display plane 12 has different angles of visibility in the horizontal direction (the x-direction) and the vertical direction (the y-direction) of the rectangular plane, and the angle of visibility in the x-direction (angle $\alpha_1$) is than that in the y-direction (angle $\alpha_2$).

When a user looks at liquid crystal display plane 12 at an angle, the image becomes negative depending on the angle. The angle between the boundaries of the region in which the image is seen normally and the region in which the image is seen as a negative image is called the angle of visibility. The angle of visibility inherently varies depending on the direction; in this embodiment, as described above, the angle of visibility $\alpha_1$ in the x-direction is larger than the angle $\alpha_2$ in the y-direction in liquid crystal display plane 12. In other words, when the display plane is seen obliquely along the horizontal axis (in the x-direction), the normally visible range (a first range) is relatively large, and when it is looked at obliquely along the vertical axis (in the y-direction), the normally visible range (a second range) is smaller than the first range.

In back light source device 20, when fluorescent lamp 26 is turned on, light is emitted corresponding to the configuration of U-shaped tube 27. Part of the light is reflected by reflection surface 23 and directed to light diffusing transmission plate 32. The remainder of the light is directly applied to light diffusing transmission plate 32. Thus, almost all of the light emitted from fluorescent lamp 26 is applied through light diffusing transmission plate 32 to liquid crystal display plane 12.

In this embodiment, since reflection surface 23 is a quadratic surface, the light reflected by plane 23 substantially uniformly illuminates light diffusing transmission plate 32 provided on the opening of casing 21. Moreover, since projection 22 also reflects the light emitted from straight portions 29a and 29b of tube 27 toward light diffusing transmission plate 32, the portion of plate 32 which faces the region between straight portions 29a and 29b is brightened.

In addition, thick portions 33a and 33b are formed on regions of plate 32 which exactly face straight portions 29a and 29b of tube 27 respectively, and decreases the amount of light transmitted therethrough. The thickness of each of thick portions 33a and 33b is gradually reduced as the distance from the longitudinal axis of straight portion 29a or 29b increases, and the amount of light transmitted through the thick portion increases in accordance with the decrease of the thickness. Hence, light diffusing transmission plate 32 having the above-mentioned structure has a function of suppressing unevenness of the luminance.

As described above, back light source device 20 is designed in an attempt to give uniform brightness to the front surface of light diffusing transmission plate 32.

However, even in light source device 20 designed as described above, the luminance on the portions of light diffusing transmission plate 32 which exactly face the lamp is relatively high, the luminance on the other portions being relatively low. Thus, the variance in luminance of display board 10 is smaller in the direction along the longitudinal axes of straight portions 29a and 29b of fluorescent lamp 26 (the x-direction). On the other hand, the variance in luminance of plate 32 in the direction perpendicular to the above-mentioned axes (the y-direction) directly influences the variance of the luminance of display board 10. Hence, if liquid crystal display board 10 and light source device 20 are coupled in a manner such that the variance of the luminance in the y-direction of display board 10 is suppressed to a minimum degree, the clarity of display board 10 can be increased.

In view of this, in this embodiment, liquid crystal display board 10 and light source device 20 are engaged in a manner such that the direction in which the angle of visibility $\alpha_1$ of liquid crystal display board 10 is larger, i.e. the horizontal direction (the x-direction) thereof coincides with the direction in which the variance of the luminance of light source device 20 is smaller, i.e. the horizontal direction (the x-direction) thereof. Since the angle of visibility of liquid crystal display board 10 is smaller in the y-direction, in which the variance of the luminance of the light diffusing transmission plate in the light source device is larger, the variance of luminance of the display board is less significant.

In contrast, if display board 10 and light source device 20 are coupled in such a manner that the y-direction in the light diffusion transmission plate coincides with the direction in which the angle of visibility of display board 10 is large, the variance of the luminance of the light diffusing transmission plate directly influences the luminance of the image on the liquid crystal display board, resulting in degradation of the clarity of the image.

In the above-described liquid crystal display according to the embodiment of the present invention, the effective angle of visibility is large.

(Embodiment 2)

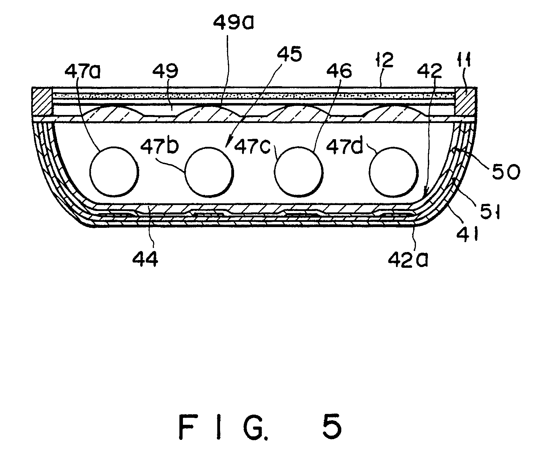

A liquid crystal display according to a second embodiment of the present invention will be described with reference to Figs. 4 and 5. The same members as in the first embodiment are identified with the same reference numerals as in the first embodiment, and the description thereof will be omitted here.

As shown in Figs. 4 and 5, the display of this embodiment has tray-shaped casing 41, the upper portion of which is open. Casing 41 is made of a metal such as aluminum or a synthetic resin such as polycarbonate, and the opening serves as a radiation section. Heater 42 is fixed to the bottom of casing 41 with adhesive 43. White insulating film 44 of substantially the same size as heater 42 is fixed to heater 42 with adhesive 43, and functions so as to insulate a lamp from heater 42 and effectively reflect visible light emitted from the lamp.

A curved fluorescent lamp, i.e., W-shaped cold cathode fluorescent lamp 45 is arranged on insulating film 44. Lamp 45 includes W-shaped tube 46 constituted by straight portions 47a, 47b, 47c, and 47d, connected through U-shaped portions 48a, 48b, and 48c. Cold cathode type electrodes 30a and 30b are connected to bases 31a and 31b, which seal tube 46 at the distal ends thereof. The inner surface of tube 27 is coated with fluorescent material (not shown). Tube 46 contains a predetermined amount of hydrargyrum and a rare gas such as argon or xenon for initiating the lamp.

Fluorescent lamp 45 is housed in casing 41 in such a manner that straight portions 47a, 47b, 47c, and 47d are substantially parallel to the bottom of casing 41. Bases 31a and 31b are engaged with and fixed by adhesive or the like to cutout sections 24a and 24b of side wall 25 of casing 41. Thus, fluorescent lamp 45 is fixed within casing 41.

Rectangular light diffusing transmission plate 49 is attached to the opening of casing 41. Light diffusing transmission plate 49 is a milky white plate made of acrylic resin and diffuses light. Thick portions 49a are formed on regions of plate 49 which exactly face straight portions 47a to 47d of tube 46, respectively. Thick portions may be formed on the front surface or the rear surface of plate 49. The thickness of each of thick portions 49a is gradually reduced as the distance from the longitudinal axis of each of the straight portions increases.

The upper and lower surfaces of heater body 42a of heater 42 are coated with heat-resistant insulating film, or polyester resin sheets 50 and 51. Heater body 42a is constituted by a film heater made of metal mesh shaped like the letter W in accordance with the configuration of the above-mentioned W-shaped tube 46. However, heater body 42a may be a snaky heater shaped like the letter W, a W-shaped Nichrome wire, or the like. Heat-resistant insulating films 50 and 51 constitute a continuous substantially rectangular film, each of which has an area covering the entire region of heater body 42a and corresponding to the configuration of the bottom of casing 41.

The effect of this embodiment will now be described.

When fluorescent lamp 45 is turned on, it emits light corresponding to the configuration of W-shaped tube 46. Part of the light is reflected from the side surfaces of casing 41 and insulating film 44 and directed to light diffusing transmission plate 49 attached to the opening of casing 41. The remainder of the light is directly applied to light diffusion transmission plate 49. Thus, almost all of the light emitted from fluorescent lamp 45 is applied through light diffusion transmission plate 32 to liquid crystal display plane 12. At this time, an electric discharge occurs between electrodes 30a and 30b of fluorescent lamp 45, and current flows through heater body 42a, thereby heating fluorescent lamp 45. Although the current thus flows through fluorescent lamp 45 and heater body 42a, the current does not leak between fluorescent lamp 45 and heater body 42a, since insulating film 44 is provided therebetween. Hence, the current in fluorescent lamp 45 is not lost, and the average luminance does not decrease.

In addition, since white insulating film 44 has high reflectivity of visible light, the average luminance is increased by 20% as compared to the conventional device.

Further, thick portions 49a are formed on regions of light diffusion transmission plate 49 which exactly face straight portions 47a to 47d of tube 46, respectively, and decrease the amount of light transmitted therethrough. The thickness of each of thick portions 49a is gradually reduced as the distance from the longitudinal axis of each of the straight portions of tube 46 increases, and the amount of light transmitted through the thick portion increases in accordance with the decrease of the thickness. Hence, light diffusing transmission plate 49 having the above-mentioned structure has a function of suppressing uneven luminance.

In light diffusing transmission plate 49 as described above, since the luminance unevenness is small in the direction perpendicular to the axes of straight portions 47a to 47d and in the direction along the axes, the luminance is substantially uniform the entire display plane.

When heater 42 is turned on before activation of fluorescent lamp 45, heater 42 heats fluorescent lamp 45 in advance. Thus, discharge can be performed easily, since hydrargyrum or a rare gas contained in Tube 46 is heated to a certain degree. In addition, since the steam pressure of hydrargyrum or a rare gas is easily increased to a predetermined value after the start of discharge, luminous flux can be built up quickly. In other words, even if the room temperature is low, the high activation characteristic is obtained.

Also, during the stable lighting, when heater 42 heats fluorescent lamp 45, the steam pressure of hydrargyrum or rare gas is maintained at a predetermined value and luminance efficiency is consistently high.

Thus, the high lamp efficiency is maintained even in a low room temperature.

Moreover, since heater 42 is constituted by film heater body 42a coated with a substantially rectangular heat-resistant insulating film 50 (51) having a size larger than the outer configuration of heater body 42a, the W-shaped heater body 42a can be treated as a substantially rectangular sheet. Hence, it is easy to adhere heater 42 to casing 41 and insulating film 44.

It is unnecessary to turn on heater 42 unless the room temperature is particularly low. In view of this, a sensor may be provided in the display in order to detect the room temperature, so that activation of heater 42 can be controlled.

In the above-described embodiment 2, casing 41 is made of a synthetic resin such as polycarbonate; however, it may be made of a metal such as aluminum. If the lamp is turned on with a high-frequency voltage, it may be made of a conductive metal to shield the high frequency wave.

In the above-described embodiments 1 and 2, a U-shaped or W-shaped lamp is used as a light source. However, a plurality of straight fluorescent lamps arranged in parallel may be used instead.

Further, the electrodes do not have to be limited to those of a cold cathode type, but may be a hot cathode type. The lamp may be a discharge lamp containing only a rare gas in the tube, not containing hydrargyrum, or a tube-like incandescent lamp.

## Claims

1. A liquid crystal display comprising a liquid crystal display board including a display plane constituted by transmission-type liquid crystals and a back light source device (20) having a light diffusing transmission plate (32) arranged at the rear of said liquid crystal display board (10) and a tube-like lamp arranged at the near of said light-diffusing transmission plate (32) for illuminating the rear surface of said liquid crystal display board (10) through said light diffusing transmission plate (32), wherein the direction in which an angle of visibility of said liquid crystal display board (10) is wider than that in another direction coincides with said direction in which unevenness of the luminance in said light diffusing transmission plate (32) is smaller than that in another direction.

2. A liquid crystal display according to claim 1, characterized in that the axis of said tube-like lamp extends in the direction in which the angle of visibility of said liquid crystal display board is wider than that in another direction.

3. A liquid crystal display according to claim 2, characterized in that said tube-like lamp is a fluorescent lamp.

4. A liquid crystal display according to claim 2, characterized in that said tube-like lamp is a U-shaped fluorescent lamp, the axis of the straight portions of said U-shaped fluorescent lamp extends in the direction in which the angle of visibility of said liquid crystal display board is wider than that in another direction.

5. A liquid crystal display comprising a liquid crystal display board including a display plane constituted by transmission-type liquid crystals and a back light source device (20) having a light diffusing transmission plate (32) arranged at the rear of said liquid crystal display board (10) and a tube-like lamp arranged at the near of said light-diffusing transmission plate for illuminating the rear surface of said liquid crystal display board (10) through said light diffusing transmission (32), wherein the direction in which an angle of visibility of said liquid crystal display board (10) is wider than that in the direction different by 90° from that direction coincides with said direction in which unevenness of the luminance in said light diffusing transmission plate (32) is smaller than that in the direction different by 90° from that direction.

F I G. 1

F I G.  2

F I G.  3

EP 0 420 072 A2

F I G. 4

# F I G. 5